**Europäisches Patentamt**

**European Patent Office**

**Office européen des brevets**

(19)

(11) Veröffentlichungsnummer: **0 151 625**

**B1**

(12)

# EUROPÄISCHE PATENTSCHRIFT

(45) Veröffentlichungstag der Patentschrift:
20.07.88

(21) Anmeldenummer: **84903055.6**

(22) Anmeldetag: **07.08.84**

(86) Internationale Anmeldenummer:
**PCT/DE 84/00165**

(87) Internationale Veröffentlichungsnummer:
**WO 85/00847 (28.02.85 Gazette 85/05)**

(51) Int. Cl.⁴: **E 05 B 49/00,** G 06 K 7/08

(54) **MIT EINEM SCHLÜSSEL ZU BETÄTIGENDE SCHLOSSVORRICHTUNG.**

(30) Priorität: **10.08.83 DE 3328892**

(43) Veröffentlichungstag der Anmeldung:
**21.08.85 Patentblatt 85/34**

(45) Bekanntmachung des Hinweises auf die Patenterteilung:
**20.07.88 Patentblatt 88/29**

(84) Benannte Vertragsstaaten:
**DE FR GB SE**

(56) Entgegenhaltungen:
**WO-A-83/01642**
**DE-A-3 202 196**
**FR-A-1 471 893**
**FR-A-2 137 279**

(73) Patentinhaber: **PERKUT, Branko R.,**
**Jochbergstrasse 10, D-8174 Benediktbeuren (DE)**
Patentinhaber: **ANETSEDER, Leopold,**
**Arnoldstrasse 13, D-8000 München 50 (DE)**

(72) Erfinder: **PERKUT, Branko R., Jochbergstrasse 10,**
**D-8174 Benediktbeuren (DE)**
Erfinder: **ANETSEDER, Leopold, Arnoldstrasse 13,**
**D-8000 München 50 (DE)**

(74) Vertreter: **Prietsch, Reiner, Dipl.- Ing.,**
**Patentanwälte Dipl.- Ing. Dipl. oec. publ. D.**
**Lewinsky, Dipl.- Ing. Reiner Prietsch**
**Gotthardstrasse 81, D-8000 München 21 (DE)**

EP 0 151 625 B1

## Beschreibung

Die Erfindung betrifft eine Schloßvorrichtung mit einem magnetisch lesbare Daten enthaltenden Schlüssel, bestehend aus mindestens einem Permanentmagneten und einem Hallgenerator, dessen magnetische Induktion sich in Abhängigkeit von der Stellung des längs seiner Achse aufeinanderfolgende, magnetisch lesbare, in einem mindestens zweiwertigen Code codierte Informationsstellen sowie Taktebenen aufweisenden Schlüssels ändert und der eine von dem Augenblickswert der Induktion abhängige Signalspannung erzeugt.

Eine derartige Schloßvorrichtung ist in Form eines mit einem Schlüssel zu betätigenden Schlosses, das den Permanentmagneten und den Hallgenerator enthält, während der Schlüssel die magnetisch lesbaren Informationsstellen und Taktebenen aufweist, aus der DE-OS-2 933 453 bekannt. Bei eingeführtem Schlüssel besteht ein geschlossener Eisenweg zwischen dem Permanentmagneten und dem Hallgenerator. Die Informationsstellen werden durch Flußleitstege verkörpert, die bei einer Codierung in einem z. B. dualen Code so gestaltet sind, daß z. B. im Falle einer logischen Eins eine hohe Induktion in dem Hallgenerator und im Fall einer logischen Null eine niedrigere Induktion in dem Hallgenerator erzeugt wird. Zwischen den Informationsstellen durchläuft die Induktion ein Minimum, das als Taktebene erkannt und bewertet wird, aus der der Takt zur elektrischen Weiterverarbeitung des der jeweils vorangehenden Informationsstelle entsprechenden Ausgangssignals des Hallgenerators abgeleitet wird.

Die fehlerfreie Erkennung der sonach zum Auslesen einer z. B. dualcodierten Schlüsselinformation erforderlichen drei Induktionswerte unterschiedlicher Höhe ist um so sicherer, je deutlicher diese drei Induktionswerte voneinander verschieden sind. In diesem Sinne hinreichend unterschiedliche Induktionswerte lassen sich unschwer dann erreichen, wenn der Abstand der Informationsstellen verhältnismäßig groß gemacht und die Restluftspalte nach dem Einführen des Schlüssels in die Schloßvorrichtung sehr klein und konstant gehalten werden können.

In bestimmten Anwendungsfällen sind diese Forderungen jedoch nicht erfüllbar. So ist etwa bei Kraftfahrzeugschlüsseln aus Gründen der Kompatibilität mit den derzeit üblichen, mechanischen Schloß/Schlüssel-Systemen die Länge des Schlüssels ebenso vorgegeben wie die Zahl der mindestens erforderlichen Informationsstellen. Hieraus ergeben sich Informationsstellenabstände - für z. B. einen Dual-Code - im Bereich von 1 mm. Außerdem ergeben sich bei Kraftfahrzeuganwendungen unvermeidbare Zusatzluftspalte zwischen Schlüssel und Hallgenerator bzw. Permanentmagnet, die durch Fertigungstoleranzen, mechanische Beschädigung (z. B. Kratzer auf den Schlüsselabtastflächen), Verschmutzung, Eisbildung usw. hervorgerufen werden. Die Verkleinerung der Informationsstellenabstände bringt naturgemäß eine Erhöhung der Streuflüsse und somit eine Anhebung der Induktion der Takt-Minima mit sich, so daß sich der nutzbare Induktionswertebereich, innerhalb dessen z. B. für einen Dual-Code drei unterschiedliche Werte - LOG 0, LOG 1 und Takt - erkannt werden müssen, verringert. Hinzu kommt, daß die für geringe Informationsstellenabstände entsprechend kleinen Flußleitstegquerschnitte bei Luftspaltbildung einen starken Anstieg des Widerstandes im Magnetkreis und somit einen entsprechend starken Abfall der den Hallgenerator durchsetzenden Induktion hervorrufen. Noch schwieriger werden die Verhältnisse bei Verwendung höherwertiger Codes, da dann in dem verhältnismäßig kleinen Bereich, über den die Induktion im Hallgenerator durch unterschiedliche Gestaltung der Flußleitstücke steuerbar ist, eine entsprechend größere Zahl an diskreten Werten sicher erkannt werden muß.

Der Erfindung liegt daher die Aufgabe zugrunde, eine Schloßvorrichtung der einleitend angegebenen Gattung zu schaffen, die weitgehend unempfindlich gegenüber Änderungen des Luftspaltes zwischen der Schloßvorrichtung und dem Schlüssel ist.

Die Lösung dieser Aufgabe ist im Kennzeichen des Anspruches 1 angegeben.

Die Unteransprüche betreffen vorteilhafte Ausführungsformen.

Die Lösung nach der Erfindung beruht darauf, daß bewußt zu dem den Hallgenerator durchsetzenden Magnetfluß ein paralleler Streu- oder Kompensationsmagnetfluß erzeugt wird, der in Verbindung mit dem Rückschlußwiderstand des in der Schloßvorrichtung bei eingeführtem Schlüssel vorhandenen Magnetkreises dafür sorgt, daß bei sich vergrößerndem Luftspalt zwischen Schlüssel und Hallgenerator die magnetische Spannung zwischen diesen beiden Teilen entsprechend anwächst, so daß der Magnetfluß durch den Hallgenerator und damit die Induktion im Hallgenerator jedenfalls im Bereich der praktisch auftretenden Luftspaltänderungen konstant bleibt. In diesem Zusammenhang ist festzuhalten, daß Änderungen des Luftspaltes auf der dem Hallgenerator gegenüberliegenden Seite des Schlüssels, die bezogen auf den Magnetfluß die Quellenseite ist, wegen der dort herrschenden, vergleichsweisen hohen Feldstärke keinen wesentlichen Einfluß auf die Induktion im Hallgenerator haben, nämlich an Änderungen der Induktion mit nur etwa 10 bis 20 % beteiligt sind.

In der Zeichnung ist die Schloßvorrichtung nach der Erfindung anhand schematisch vereinfachter Ausführungsbeispiele und erläuternder Diagramme veranschaulicht. Es zeigt:

Fig. 1    ein Diagramm des Magnetflusses durch den Hallgenerator im Fall einer Schloßvorrichtung nach dem Stand der Technik,

Fig. 2    ein Diagramm des Magnetflusses durch den Hallgenerator bei der Schloßvorrichtung nach der Erfindung,

Fig. 3    eine erste Ausführungsform des Schlüssels

Fig. 4 und 5    den Schlüssel nach Fig. 3 in zwei verschiedenen Stellungen in der Schloßvorrichtung im Schnitt,

Fig. 6a und 6b    eine vereinfachte Darstellung der Schloßvorrichtung bei zwei unterschiedlichen Luftspalten zwischen Sensor und Schlüssel,

Fig. 7    ein Ersatzschaltbild des Magnetkreises der Schloßvorrichtung,

Fig. 8    ein Diagramm zur Erläuterung der erzielten Luftspaltkompensation,

Fig. 9 a bis 9e    den den Hallgenerator enthaltenden Sensor der Schloßvorrichtung in verschiedenen Schnitten und Ansichten,

Fig. 10    eine weitere Ausführungsform des Sensors im Schnitt,

Fig. 11a bis 11c    eine dritte Ausführungsform des Sensors,

Fig. 12    ein Diagramm der Aussteuerung des Hallgenerators bei minimalem und bei maximalem Luftspalt zwischen Schlüssel und Sensor,

Fig. 13a bis 13c    eine weitere Ausführungsform der Schloßvorrichtung.

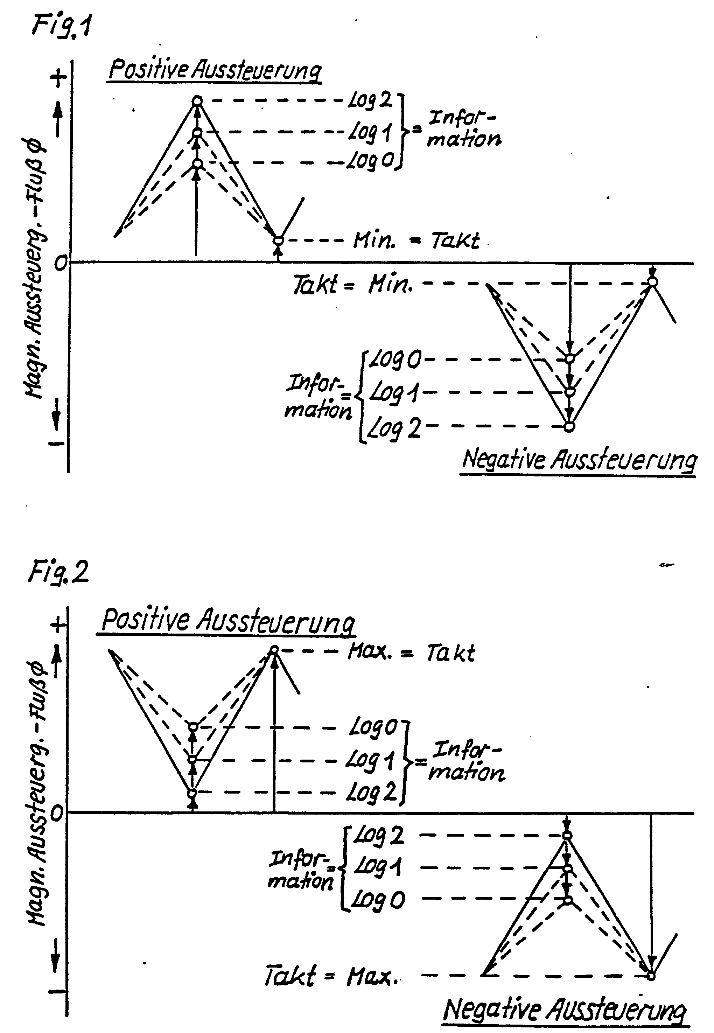

Das Diagramm der Fig. 1 bezieht sich auf eine Schloßvorrichtung der einleitend angegebenen, vorbekannten Art. Auf der Abszisse ist die Stellung der Flußleitstege des Schlüssels zur magnetischen Mitte des Hallgenerators aufgetragen, auf der Ordinate der stellungsabhängige Magnetfluß Ø durch den Hallgenerator. Man erkennt, daß unabhängig vom Vorzeichen des Flusses bei dem angenommenen dreiwertigen Code vier unterschiedliche Flußwerte detektiert werden müssen, wobei dem Minimumwert die Bedeutung "Takt" zugeordnet ist. Die Informationsmaxima entstehen bei jeweiliger Übereinstimmung eines Flußleitsteges des Schlüssels mit der magnetischen Mitte des Hallgenerators, die Höhe des Informationsmaximums wird durch eine unterschiedliche Flußleitung der Flußleitstege, z. B. Luftspaltcodierung, erzeugt. Das Minimum, das den Bewertungstakt für die vorangegangene Information liefert, ergibt sich aus dem Streufluß zweier benachbarter Flußleitstege durch den Hallgenerator, wenn dessen magnetische Mitte mit gleichem Abstand zwischen den beiden Flußleitstegen liegt. Grundsätzlich gilt:

/ Informationsaussteuerung / > / Takt-Aussteuerung /

Diese Art der Codierung hat bei veränderlichem Luftspalt zwischen Schlüssel und Schloßvorrichtung die einleitend angegebenen Nachteile, insbesondere dann, wenn das Raster, in dem die die Informationsstelle verkörpernden Flußleitsttücke angeordnet sind, klein ist und/oder höherwertige Codes verwendet werden.

Die Schloßvorrichtung der hier vorgeschlagenen Art arbeitet demgegenüber in der durch das Diagramm der Fig. 2 veranschaulichten Art und Weise, bei der dem Takt das Maximum des magnetischen Flusses Ø zugeordnet ist, während die Codewerte der Information durch unterschiedliche, in jedem Fall jedoch niedrigere Werte des magnetischen Flusses gekennzeichnet sind. Die Informationsstellung ist jeweils gegeben, wenn die magnetische Mitte des Hallgenerators symmetrisch zwischen zwei Taktflußleitstegen zu liegen kommt. In dieser Stellung werden entsprechend den gewünschten unterschiedlichen Informationspegeln, unterschiedliche Informationsstreuflüsse in den Hallgeneratorpfad eingekoppelt. Die Codierung der Informationsstreuflüsse kann auf zweierlei Weise erfolgen. Eine erste Möglichkeit besteht darin, die Größe des Informationsstreuflusses durch die Größe des Abstandes zweier benachbarter Taktflußleitstege festzulegen, d.h., die Informationscodierung erfolgt über eine der Codewertigkeit entsprechende, unterschiedliche Anzahl von Taktflußleitsteg-Abständen - im vorliegenden Fall, für eine Dreiwertigkeit von drei Abstandsvarianten. Der kleinste Taktflußleitsteg-Abstand erzeugt den größten Informationsstreufluß z. B. mit LOG 0 definiert, der mittlere -Abstand entspricht dann LOG 1 und der größte -Abstand erzeugt den kleinsten Informationsstreufluß entsprechend LOG 2. Eine zweite Möglichkeit besteht darin, die Taktflußleitstege im gleichen Abstand im Schlüssel anzuordnen und dazwischen körperlich sog. Informationsflußleitstege einzubringen, die eine der Codewertigkeit entsprechende Anzahl verschiedener Streuflußkoppelwiderstände zu den Taktflußleitstegen aufweisen. Damit wird in Informationsstellung, in der ein Informationsflußleitsteg dem Hallgenerator deckungsgleich gegenübersteht, ein unterschiedlicher Streufluß von zwei benachbarten Taktflußleitstegen über einen Informationsflußleitsteg in den Hallgeneratorpfad eingekoppelt, sodaß sich unterscheidbare Werte der Informationsaussteuerung ergeben. In jedem Falle gilt:

/ Informationsaussteuerung / $<$ / Takt-Aussteuerung /

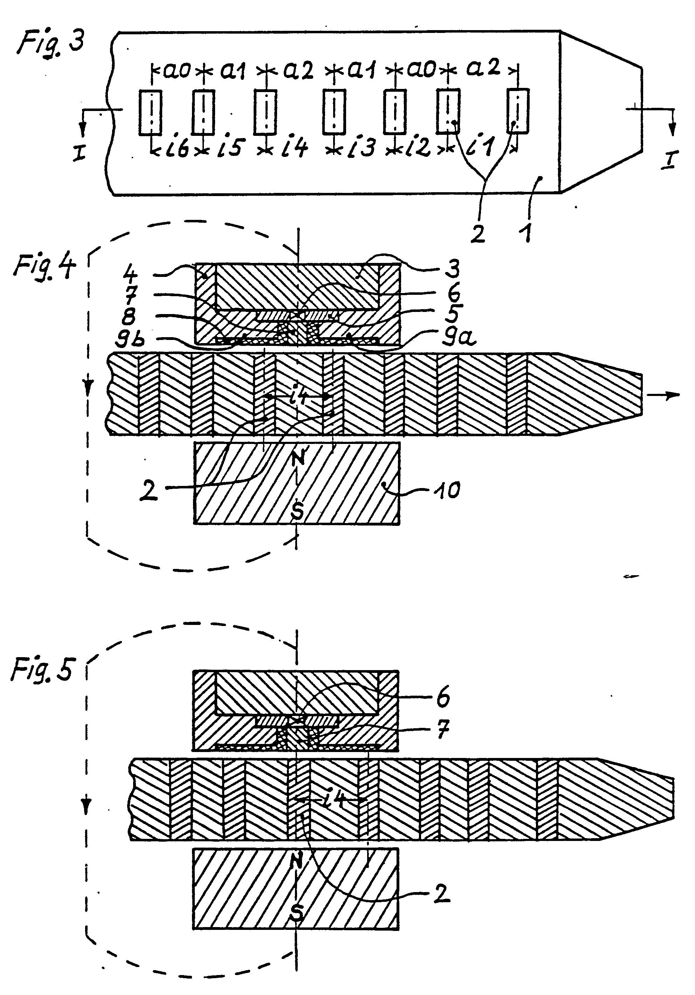

Fig. 3 bis 5 zeigen am Beispiel eines Schloß/Schlüssel-Systems eine mit unterschiedlichen Abständen der Taktebenen arbeitende Ausführungsform der Schloßvorrichtung.

In Fig. 3 sind in dem Schlüsselkörper 1 aus magnetisch nicht leitendem Material Flußleitstege 2 eingebettet, die jeweils eine Taktebene festlegen, also zu einem maximalen Fluß Ø durch den Hallgenerator führen, wenn sie diesem gegenüberstehen. Die Flußleitstege 2 sind in drei unterschiedlichen Abständen $a_0$, $a_1$ und $a_2$ voneinander angeordnet und definieren damit über den Betrag des zwischen ihnen sich beim Vorbeiführen des Schlüsselkörpers 1 an dem Hallgenerator ergebenden Streuflusses unterschiedliche Informationscodewerte. Sofern festgelegt wird, daß

$a_0$ = LOG 0
$a_1$ = LOG 1
$a_2$ = LOG 2,

trägt also im Fall der Fig. 3 der Schlüsselkörper 1 die sechsstellige Codeinformation $i_1$ bis $i_6$ in der Folge 2 0 1 2 1 0.

Fig. 4 zeigt den längs der Linie I-I in Fig. 3 geschnittenen, in die Schloßvorrichtung eingeführten Schlüssel 1 in derjenigen Stellung, in der die Informationsstelle $i_4$ ausgelesen wird. Die Schloßvorrichtung enthält hierzu einen Permanentmagneten 10 sowie auf der in Bezug auf den Schlüssel 1 gegenüberliegenden Seite einen Sensor. Dieser besteht aus einem magnetisch leitenden Sensorträger 3, einer Sensorkappe 4, die ggf. auch magnetisch leitend sein kann, einer Hallgeneratoreinheit 5, in die der eigentliche Hallgenerator 6 eingebettet ist, einem Hallgeneratorflußleitsteg 7 und einer magnetisch nicht leitenden Vergußmasse 8, die sowohl den freien Raum zwischen dem Hallgeneratorflußleitsteg 7 und den gegenüber der Oberfläche des Sensors zurückversetzten Kompensationsflußleitstegen 9a, 9b ausfüllt als auch eine plane, dem Schlüssel 1 zugewandte Fläche des Sensors sicherstellt. Der Zweck und die genaue Form dieser Kompensationsflußleitstege 9a und 9b wird im Zusammenhang mit den nachfolgenden Figuren noch genauer erläutert werden. Man erkennt jedoch aus Fig. 4, daß in der gezeichneten Stellung des Schlüssels 1 ein Teil des durch den Permanentmagneten 10 erzeugten Magnetflusses über die Flußleitstege 2 in Form eines Streuflusses den Hallgenerator 6 durchsetzt, während ein weiterer Anteil über die Kompensationsflußleitstege 9a, 9b unmittelbar über die Sensorkappe 4 verläuft, wobei der magnetische Rückschluß zu dem Permanentmagneten 10 über Luft erfolgt.

Fig. 5 zeigt in gleicher Darstellung den Schlüssel 1 in derjenigen Stellung, in der ein Flußleitsteg 2 dem Kallgenerator 6 bzw. dessen Flußleitstege 7 genau gegenübersteht, so daß also der Hallgenerator 6 von dem maximal möglichen Fluß durchsetzt wird.

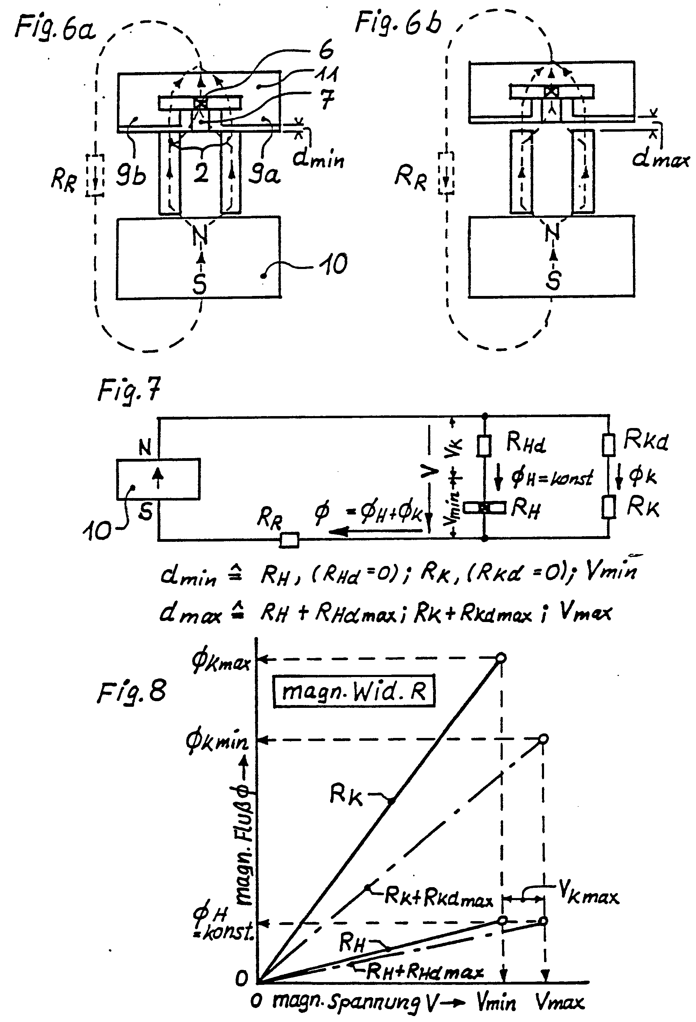

Die Fig. 6a und 6b zeigen schematisch vereinfacht nochmals die in Fig. 4 dargestellte Stellung, in der eine Informationsstelle ausgelesen wird. Im Fall der Fig. 6a ist jedoch angenommen, daß der Luftspalt d zwischen der dem Sensor 11 zugewandten Fläche des Schlüssels ein Minimum ist, während im Fall der Fig. 6b dieser Luftspalt d den maximal zulässigen Wert hat. Der magnetische Rückschlußkreis ist in beiden Fällen durch einen magnetischen Widerstand $R_R$ symbolisiert. Wichtig ist, daß der minimale Luftspalt $d_{min}$ durch Zurückversetzung der Kompensationsflußleitstege 9a, 9b gegenüber der Sensoroberfläche konstruktiv vorgegeben ist. Durch die Größe dieses Luftspaltes $d_{min}$ und den wirksamen Querschnitt der Kompensationsflußleitstege 9a, 9b läßt sich der Kompensationsbetrag der magnetischen Spannung festlegen, der erforderlich ist, um bis zu dem Wert $d_{max}$ des Luftspaltes den Fluß durch den Hallgenerator 6 zumindest annähernd konstant zu halten. Der tolerierbare tatsächliche Luftspalt zwischen der Oberfläche des Schlüssels und der Sensoroberfläche beträgt dementsprechend $d_{max}$ minus $d_{min}$.

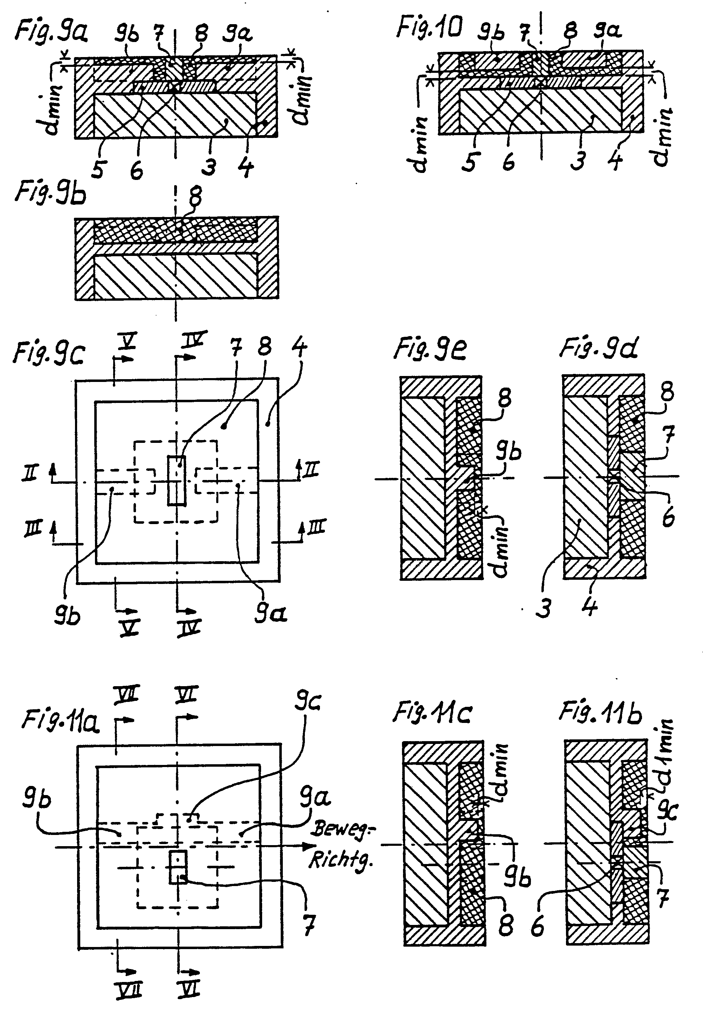

Fig. 7 zeigt das magnetische Ersatzschaltbild. Die verwendeten Bezeichnungen haben folgende Bedeutung:

| | |
|---|---|
| $d_{min}$: | Konstruktiv vorgegebener, minimaler Luftspalt entweder zwischen der Oberfläche der Kompensationsflußleitstege und der Sensoroberfläche oder zwischen den Kompensationsflußleitstegen und der magnetischen Rückschlußmasse. |
| $d_{max}$: | $d_{min}$ zuzüglich einem Maximalwert des durch Toleranzen, Verunreinigungen usw. bedingten, unerwünschten Luftspalts zwischen der Schlüsseloberfläche und der Sensoroberfläche. |
| $R_R$: | Magnetischer Rückschlußwiderstand zwischen dem Sensor und dem Permanentmagnet. |
| $Ø_H$: | Magnetischer Fluß durch den Hallgenerator. |
| $Ø_K$: | Magnetischer Fluß über die Kompensationsflußleitstege. |
| $Ø$: | Summenfluß $Ø_H + Ø_K$ über $R_R$. |
| $R_H$: | Magnetischer Widerstand des Sensors über den Hallgeneratorpfad. |
| $R_{Hd}$: | Durch den unerwünschten Luftspalt zwischen dem Schlüssel und der |

Sensoroberfläche bedingter, zusätzlicher magnetischer Widerstand im Kallgeneratorpfad.

$R_K$ : Magnetischer Widerstand des Sensors im Kompensationspfad.

$R_{Kd}$: Durch den unerwünschten Luftspalt zwischen dem Schlüssel und der Sensoroberfläche bedingter, zusätzlicher magnetischer Widerstand im Kompensationspfad.

$V_{min}$: Magnetische Spannung über den Hallgenerator bzw. über den Kompensationspfad bei $d_{min}$.

$V_{max}$: Summe $V_{min}$ + $V_{Kmax}$.

$V_K$ : Magnetische Kompensationsspannung, hervorgerufen durch Widerstandserhöhung im Kompensationspfad ($R_{Kd}$) bei Auftreten eines Luftspalts zwischen der Sensoroberfläche und der Schlüsseloberfläche.

Gemäß Fig. 7 bilden der Hallgeneratorpfad und der Kompensationspfad einen Parallelkreis, so daß sich der Gesamtfluß Ø, der über den Rückschlußwiderstand $R_R$ zum Magnet 10 zurückfließt, aus dem Hallgeneratorfluß $Ø_H$ und dem Kompensationsfluß $Ø_K$ zusammensetzt. Der Kompensationspfad hat die Aufgabe, bei Luftspaltbildung zwischen dem Schlüssel und der Sensoroberfläche die magnetische Spannung V am Parallelkreis so zu steuern, daß der luftspaltabhängige Widerstand $R_{Hd}$ im Sinne der Konstanthaltung des Hallgeneratorflusses $Ø_H$ kompensiert wird, d.h., es ist eine Kompensationsspannung $V_K = Ø \cdot R_{Hd}$ zu erzeuen. Ist kein Luftspalt zwischen Schlüssel und Sensoroberfläche, so sind die luftspaltabhängigen Widerstände $R_{Hd}$d im Hallgeneratorpfad bzw. $R_{Kd}$ im Kompensationspfad gleich Null und somit auch die Kompensationsspannung $V_K = 0$.

Nimmt der Luftspalt Werte größer Null an und steigt, so bilden sich auch steigende Werte für die magnetischen Widerstände $R_{Hd}$ bzw. $R_{Kd}$ aus, die den Gesamtwiderstand des Parallelkreises aus Hallgeneratorpfad und Kompensationspfad ansteigen lassen und so durch die magnetische Spannungsteilung mit dem Rückschlußwiderstand $R_R$ die magnetische Spannung V am Parallelkreis und damit am Hallgeneratorpfad um den Betrag $V_K = Ø_H \cdot R_{Hd}$ ansteigen lassen - es gilt: $V = V_{min} + V_K$. Um eine exakte Kompensation bzw. Konstanthaltung des Hallgeneratorflusses $Ø_H$ zu erreichen, muß die Kompensationsspannung $V_K$ eine Kompensationssteilheit von $V_K/R_{Hd} = Ø_H$ aufweisen. Die Kompensationssteilheit ist das Produkt aus mittlerer Grundsteilheit, die durch die Wahl des magnetischen Spannungsteiler-Verhältnisses aus Rückschlußwiderstand $R_R$ und Parallelkreisgesamtwiderstand für einen mittleren Luftspalt gegeben ist und dynamischer Steilheit des Widerstandsverlaufes des Parallelkreises im relevanten Luftpaltbereich durch die Widerstände $R_{Hd}$ und $R_{Kd}$. Die mittlere Grundsteilheit ist optimal dimensioniert, wenn der Wert des Parallelkreiswiderstandes dem des Rückschlußwiderstandes $R_R$ entspricht. Dies wird durch geeignete Wahl von $R_R$ bzw. $R_K$ erreicht. $R_R$ ist durch die Rückschlußflächen des Sensors bzw. des Permanentmagneten und dessen mittleren Abstand zueinander, $R_K$ ist durch die Flußkontaktflächen der Taktflußleitstege 2 bzw. Kompensationsflußleitstege 9a, 9b und deren Abstand $d_{min}$ von der Sensoroberfläche gegeben. Die dynamische Widerstandskomponente des Parallelkreises aus $R_{Hd}$ und $R_{Kd}$ wird durch die Dimensionierung der Flußkontaktflächen der Flußleitstege 2, 7, 9a, 9b - große Querschnitte ergeben eine kleine Widerstandsdynamik und umgekehrt - festgelegt.

Diese Verhältnisse sind in dem Diagramm der Fig. 8 veranschaulicht, das in durchgezogenen Linien im Zusammenhang mit der magnetischen Spannung V und dem Fluß Ø im Falle von $d_{min}$, in strichpunktierten Linien und im gleichen Zusammenhang im Falle von $d_{max}$ zeigt. Man erkennt, daß $R_{Kd}$ eine Kompensationsspannung $V_K$ entstehen läßt, die dafür sorgt, daß $Ø_H$ auch bei von Null verschiedenem $R_{Hd}$ konstant bleibt. Diese Kompensation ist selbstverständlich nur innerhalb eines konstruktiv vorgegebenen Luftspaltbereiches bis $d_{max}$ in vollem Umfang wirksam. Bei geeigneter Dimensionierung des Kompensationspfades lassen sich Luftspalte zwischen Schlüssel und Sensoroberfläche bis zu 0,2 mm derart kompensieren, daß $Ø_H$ sich um nicht mehr als ± 5 % ändert.

In Fig. 9a bis 9e ist der Aufbau des Sensors im einzelnen dargestellt. Wie aus Fig. 9a ersichtlich, sind die Kompensationsflußleitstege 9a, 9b um den Betrag $d_{min}$ gegenüber der Sensoroberfläche zurückversetzt. Der Schnitt in Fig. 9a verläuft längs der Linie II-II in Fig. 9c.

Fig. 9b zeigt einen Schnitt längs der Linie III-III in Fig. 9c.

Fig. 9c ist eine Aufsicht auf die dem Schlüssel zugewandte Großfläche des Sensors.

Fig. 9d zeigt einen Schnitt längs der Linie IV-IV in Fig. 9c.

Fig. 9e zeigt einen Schnitt längs der Linie V-V in Fig. 9c.

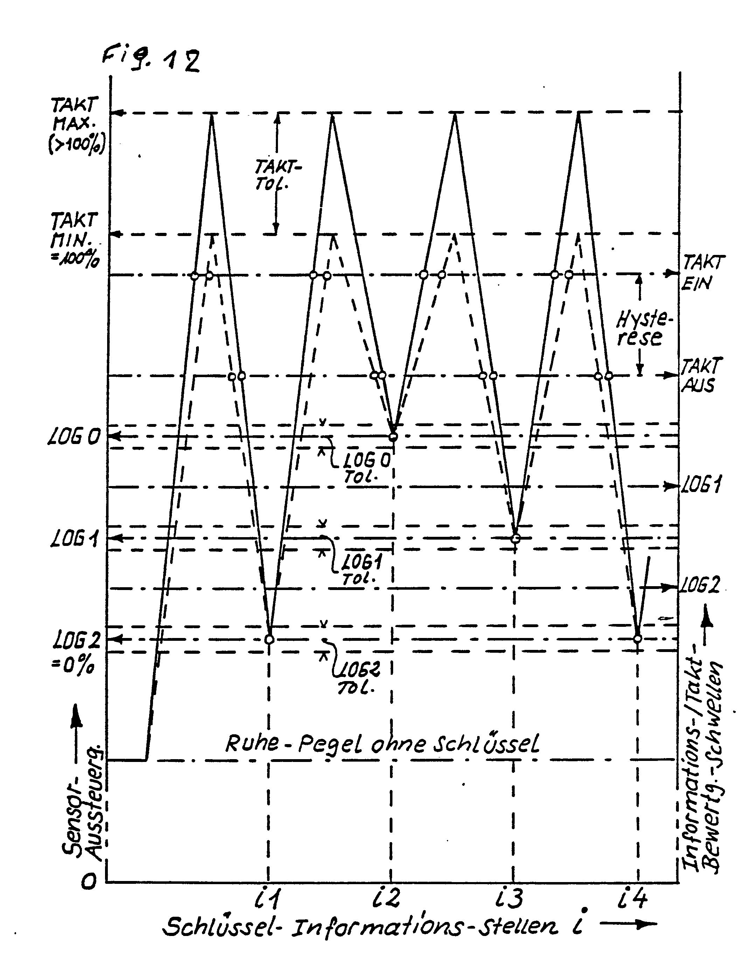

In Fig. 10 ist eine weitere Ausführungsform des Sensors in einem der Fig. 9a entsprechenden Schnitt dargestellt. Die Flußleitstege 9a, 9b sind bündig mit der Sensoroberfläche. Der konstruktiv vorgegebene Kompensationsluftspalt $d_{min}$ befindet sich innerhalb des Sensors und besteht aus einem Spalt zwischen den Kompensationsflußleitstegen 9a, 9b gegenüber der Sensorkappe 4. Der Spalt ist mit der Vergußmasse 8, z. B. Glas, ausgefüllt.

In den beiden Ausführungsformen muß der magnetische Rückschluß nicht notwendigerweise über die Sensorkappe 4 hergestellt werden. Vielmehr ist bei geeigneter konstruktiver Ausbildung des magnetisch leitenden Sensorträgers 3 auch die Verwendung einer Sensorkappe aus magnetisch nicht leitendem Material möglich.

Bei den bisher beschriebenen Ausführungsformen wird der Luftspalt zwischen dem Schlüssel und der Sensorfläche in derjenigen Stellung des Schlüssels kompensiert, in der die Informationsstelle ausgelesen wird. Zusätzlich kann jedoch auch der Luftspalt in derjenigen Stellung kompensiert werden, in der der Takt erkannt wird (vgl. Fig. 5). Eine derartige Ausführungsform des Sensors ist in Fig.11a bis 11c dargestellt. Die Kompensation geschieht mittels eines weiteren Kompensationsflußleitsteges $9c$, der symmetrisch zu dem Hallgeneratorflußleitsteg 7, jedoch gegenüber diesem mittenversetzt angeordnet ist. Der Hallgeneratorflußleitsteg 7 (sowie der Hallgenerator selbst) ist seinerseits mittenversetzt gegenüber der Mittelachse des Schlüssels, die mit dem Pfeil "Bewegungsrichtung" zusammenfällt. Auf diese Weise wird ein weiterer, in erster Linie in der Taktauslesestellung des Schlüssels wirksamer Nebenschluß mit einem konstruktiv vorgegebenen Zusatzluftspalt $d_{min}$ erzeugt.

Bei geeigneter Abstimmung von $d_{1min}$ sowie der Koppelfläche des Kompensationsflußleitsteges $9c$ ist eine nahezu vollständige Kompensation über einen kleinen Bereich des Luftspaltes zwischen Schlüssel und Sensroberfläche in Taktauslesestellung möglich sowie eine Teilkompensation über den gesamten Luftspaltbereich bis $d_{max}$.

Fig. 11a zeigt eine Aufsicht auf den Sensor, Fig. 11b einen Schnitt längs der Linie VI-VI und Fig. 11c einen Schnitt längs der Linie VII-VII in Fig. 11a.

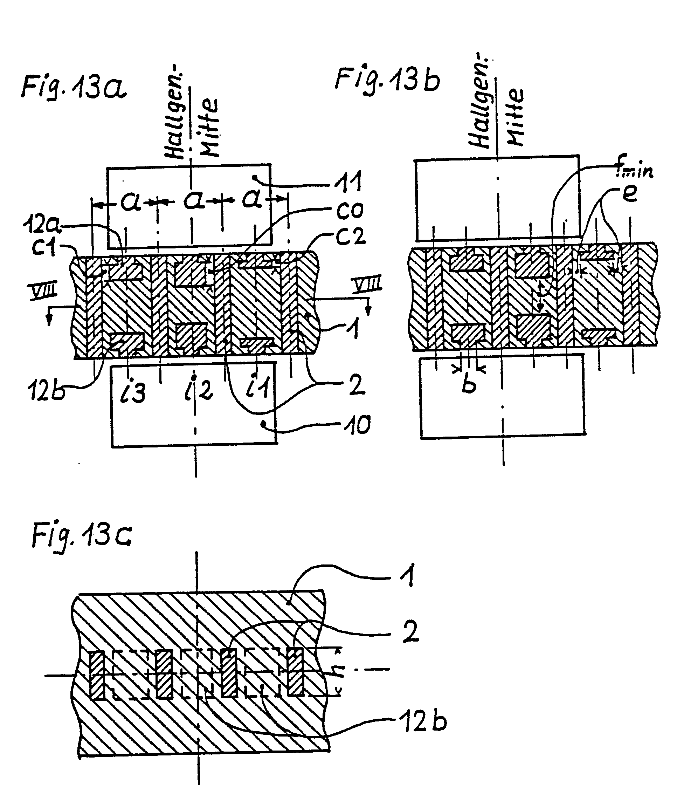

Das Diagramm der Fig. 12 zeigt die Aussteuerung eines Sensors nach Fig. 9a-e oder Fig. 10 mit Informationskompensation (ohne Taktkompensation) beim Vorbeiführen eines Schlüssels, der das dreiwertige Codewort 2 0 1 2 enthält. Die durchgezogenen Aussteuerlinien entsprechen einem luftspaltfreien Anliegen des Schlüssels an der Sensoroberfläche, die gestrichelten Linien einen Verlauf mit maximalem Luftspalt. Die Taktaussteuerung ist im Bewertungsbereich so eingeordnet, daß für den größtmöglichen Luftspalt die Aussteuerung mit 100 % definiert ist. Die durch Strichlierung begrenzten Bereiche um die Aussteuerpegel LOG 0, LOG 1, LOG 2, symbolisieren den Toleranzbereich der Informationskompensation im gesamten Luftspaltbereich zwischen Schlüssel und Sensoroberfläche. Die strichpunktierten Linien mit Bezug auf die rechte Ordinate stellen die Bewertungsscwellen für die beiden Takthysteresepunkte sowie die Informationspegel LOG 1 und LOG 2 dar. Der Informationspegel LOG 0 wird durch die Taktbewertungsschwelle "TAKT-AUS" bewertet. Der strichpunktierte niedrigste Pegel ergibt sich bei aus der Schloßvorrichtung herausgezogenem Schlüssel.

Bei den bisher beschriebenen Ausführungsformen erfolgte die Informationscodierung über die Wahl entsprechend unterschiedlicher Abstände der Taktflußleitstege 2 in dem Schlüssel 1. Es ist jedoch auch möglich, die Taktflußleitstege 2 in einem festen Raster vorzusehen und den den jeweiligen Codewert festlegenden Streufluß zwischen den Taktflußleitstegen durch Koppelflußleitstege zwischen den Taktflußleitstegen zu beeinflussen. Eine solche Ausführungsform ist in Fig. 13a bis 13c dargestellt. In den Schlüssel 1 sind hierzu zwischen den Taktflußleitstegen 2 Koppelflußleitstege $12a$ eingebettet, deren Querschnitt und Abstand von den benachbarten Taktflußleitstegen 2 die Höhe des Streuflusses bestimmen, der in der in Fig. 13a gezeigten Stellung des Schlüssels 1 den Hallgenerator durchsetzt. Die symmetrisch zu den Koppelflußleitstegen $12a$ angeordneten Koppelflußleitstege $12b$ haben lediglich den Zweck, den Schlüssel 1 symmetrisch und damit wendbar auszubilden.

In Fig. 13b ist der Schlüssel 1 in Taktauslesestellung dargestellt.

Zur Codierung der Informationsstellen $i_1$ bis $i_3$ stehen verschiedene Abmessungsparameter der Koppelflußleitstege $12a$, $12b$ zur Verfügung. Im Falle der Fig. 13a erfolgt die Codierung über die Bemessung der Koppelfläche zwischen dem Koppelflußleitsteg und den benachbarten Taktflußleitstegen entsprechend den Abmessungen $c_0$, $c_1$ und $c_2$. Die Codierung kann aber auch über den Abstand $e$ der Koppelflußleitstege $12a$, $12b$ zu den Taktflußleitstegen oder über die Höhe $h$ der Koppelflußleitstege - Fig. 13c - erfolgen. Zweckmäßig ist es hierbei, die Breite der Koppelflußleitstege $12a$, $12b$ in ihrem an die Außenflächen des Schlüssels 1 angrenzenden Abschnitt auf das Maß $b$ zu verringern, da dann Toleranzen der Schlüsseldicke praktisch ohne Einfluß auf den über die Abmessungen der Koppelflußleitstege festgelegten Codewert des Streuflusses bleiben.

Bei dem dargestellten Ausführungsbeispiel eines wendbaren Schlüssels werden die Koppelflußleitstege $12a$, $12b$ so dimensioniert, daß der magnetische Widerstand über die Strecke $f_{min}$ wesentlich größer als der magnetische Koppelwiderstand zu den benachbarten Taktflußleitstegen ist. Dies hat den Zweck, in der Informationsabtaststellung gemäß Fig. 13a den direkten Durchgriff des Magnetflusses des Permanentmagneten 10 zu dem Hallgenerator möglichst niedrig zu halten, da hierdurch die Kompensation verschlechtert werden würde.

Fig. 13b zeigt den Schlüssel in Taktauslesestellung.

Fig. 13c zeigt einen Schnitt längs der Linie VIII-VIII in Fig. 13a.

Der für die Kompensation erforderliche konstruktive Luftspalt $d_{min}$ kann anstatt im Sensor auch im Schlüssel, durch Zurückversetzung der Austrittsflächen der Taktflußleitstege 2 bzw. Koppelflußleitstege 12a, 12b um den entsprechenden Luftspaltbetrag gegenüber der Schlüsseloberfläche realisiert werden. Die Spalttiefe an der Schlüsseloberfläche kann vorteilhafterweise zum Schutz der Flußleitstege mit einem magnetisch nicht leitenden Material aufgefüllt werden, so daß eine mit der Schlüsseloberfläche planparallele Fläche entsteht. Dies hat auch den Vorteil, daß der Code optisch nicht lesbar bzw. das Vorhandensein dessen nicht erkennbar ist. Der sich hierdurch in Taktauslesestellung ergebende Zusatzluftspalt zwischen Taktflußleitsteg 2 und Hallgeneratorflußleitsteg 7, verringert das Taktmaximum um einen entsprechenden konstanten Betrag.

Anstelle eines Hallgenerators kann auch ein anderer magnetisch/elektrischer Wandler, z. B. eine Feldplatte, verwendet werden.

**Patentansprüche**

1. Schloßvorrichtung mit einem magnetisch lesbare Daten enthaltenden Schlüssel (1), bestehend aus mindestens einem Permanentmagneten (10) und einem Hallgenerator (6), dessen magnetische Induktion sich in Abhängigkeit von der Stellung des längs seiner Achse aufeinanderfolgende, magnetisch lesbare, in einem mindestens zweiwertigen Code codierte Informationsstellen sowie Taktebenen aufweisenden Schlüssels (1) ändert und der eine vom Augenblickswert der Induktion abhängige Signalspannung erzeugt, dadurch gekennzeichnet, daß der Schlüssel (1) in jeder auszulesenden Taktebene ein Flußleitstück (2) enthält, das in seiner Stellung gegenüber dem Hallgenerator (6) ein Maximum des diesen durchsetzenden magnetischen Flusses erzeugt, daß die Größe des Streuflusses zwischen zwei aufeinanderfolgenden Flußleitstücken (2) in deren Stellung symmetrisch zu dem Hallgenerator (6) die Wertigkeit der Informationsstelle ($i_1$ bis $i_6$) angibt, daß der Hallgenerator (6) in einem Sensor (11) sitzt, der mindestens einen weiteren, zu dem den Hallgenerator (6) enthaltenden Magnetkreis parallelen Kompensationsmagnetkreis aufweist, daß der magnetische Rückschluß von dem den Hallgenerator (6) enthaltenden Magnetkreis und dem Kompensationsmagnetkreis zu dem Permanentmagneten (10) über einen vorgegebenen magnetischen Rückschlußwiderstand ($R_R$) verläuft, und daß die magnetischen Widerstände des den Hallgenerator (6) enthaltenden Magnetkreises und des Kompensationsmagnetkreises derart bemessen sind, daß bei einem Luftspalt zwischen dem Schlüssel (1) und dem Sensor (11) eine magnetische Kompensationsspannung ($V_K$) in solcher Höhe entsteht, daß der magnetische Fluß durch den Hallgenerator (6) im wesentlichen konstant bleibt.

2. Schloßvorrichtung nach Anspruch 1, dadurch gekennzeichnet, daß die magnetischen Widerstände des Kompensationsmagnetkreises bzw. der Kompensationsmagnetkreise im wesentlichen aus mindestens einem Kompensationsflußleitsteg (9a, 9b, 9c) und mindestens einem konstruktiv vorgegebenen Luftspalt ($d_{min}$; $d_{1min}$) besteht, wobei die magnetisch wirksamen Querschnittsflächen des Kompensationsflußleitsteges im Zusammenwirken mit dem Luftspalt den Betrag des betreffenden magnetischen Widerstandes festlegen.

3. Schloßvorrichtung nach Anspruch 1 oder 2, dadurch gekennzeichnet, daß ein erster Kompensationsmagnetkreis aus zu dem Hallgenerator symetrisch und in Abstand angeordneten, in der Informationsauslesestellung des Schlüssels (1) wirksamen Kompensationsflußleitstegen (9a, 9b) besteht, die einerseits mit dem Schlüssel (1), andererseits mit der magnetischen Rückschlußseite des den Hallgenerator (6) enthaltenden Magnetkreises magnetisch gekoppelt sind.

4. Schloßvorrichtung nach Anspruch 1 oder 2, dadurch gekennzeichnet, daß ein zweiter Kompensationsmagnetkreis aus einem weiteren, zu dem Hallgenerator (6) symmetrisch und in Abstand angeordneten, in der Taktauslesestellung wirksamen Kompensationsflußleitsteg (9c) besteht, der einerseits mit dem Schlüssel (1), andererseits mit der magnetischen Rückschlußseite des den Hallgenerator (6) enthaltenden Magnetkreises magnetisch gekoppelt ist.

5. Schloßvorrichtung nach einem der Ansprüche 1 bis 4, dadurch gekennzeichnet, daß die Größe des Streuflusses zwischen zwei aufeinanderfolgenden Flußleitstegen (2) des Schlüssels (1) durch deren gegenseitigen Abstand festgelegt ist.

6. Schloßvorrichtung nach einem der Ansprüche 1 bis 4, dadurch gekennzeichnet, daß die Größe des Streuflusses zwischen zwei aufeinanderfolgenden Flußleitstegen (2) des Schlüssels (1) durch zwischen den in gleichen gegenseitigen Abständen aufeinanderfolgenden Flußleitstegen (2) angeordnete Koppelflußleitstege (12a, 12b) unterschiedlicher geometrischer Form festgelegt ist.

7. Schloßvorrichtung nach Anspruch 6, dadurch gekennzeichnet, daß die Koppelflußleitstege (12a, 12b) im Bereich ihres Austritts aus dem Schlüssel einen Abschnitt verringerter, konstanter Breite (b) besitzen.

8. Schloßvorrichtung nach Anspruch 7, dadurch gekennzeichnet, daß die Taktflußleitstege (2) bzw. Koppelflußleitstege (12a, 12b) um einen Teilbetrag oder Gesamtbetrag des konstruktiv

vorgegebenen Luftspaltes ($d_{min}$) des Kompensationskreises bzw. der Kompensationskreise gegenüber der Schlüsseloberfläche zurückversetzt sind.

## Claims

1. A lock device with a key (1) containing magnetically readable data, comprising at least one permanent magnet (10) and a Hall generator (6) whose magnetic induction varies in dependence on the position of the key (1) which has magnetically readable information positions disposed in succession along its axis and which are coded in an at least two- valued code, and clock planes, and which produces a signal voltage dependent on the instantaneous value of the induction, characterised in that in each clock plane to be read out the key (1) has a flux conduction portion (2) which in its position relative to the Hall generator (6) produces a maximum of the magnetic flux passing therethrough, that the magnitude of the leakage flux between two successive flux conduction portions (2), in the position thereof symmetrically with respect to the Hall generator (6), gives the valency of the information position ($i_1$ to $i_6$), that the Hall generator (6) sits in a sensor (11) which has at least one further compensation magnetic circuit which is parallel to the magnetic circuit containing the Hall generator (6), that the magnetic return from the magnetic circuit containing the Hall generator (6) and the compensation magnetic circuit to the permanent magnet (10) goes by way of a predetermined magnetic return resistance ($R_R$), and that the magnetic resistances of the magnetic circuit containing the Hall generator (6) and of the compensation magnetic circuit are such that, with an air gap between the key (1) and the sensor (11), a compensation magnetomotive force ($V_K$) is produced, of such a level that the magnetic flux through the Hall generator (6) remains substantially constant.

2. A lock device according to claim 1 characterised in that the magnetic resistances of the compensation magnetic circuit or the compensation magnetic circuits substantially comprises at least one compensation flux conduction limb (9a, 9b, 9c) and at least one structurally preset air gap ($d_{min}$ ; $d_{1min}$), wherein the magnetically operative cross-sectional areas of the compensation flux conduction limb, in cooperation with the air gap, establish the amount of the respective magnetic resistance.

3. A lock device according to claim 1 or claim 2 characterised in that a first compensation magnetic circuit comrises compensation flux conduction limbs (9a, 9b) which are arranged symmetrically with respect to the Hall generator and at a spacing and which are operative in the information read-out position of the key (1) and which are magnetically coupled on the one hand to the key (1) and on the other hand to the magnetic return side of the magnetic circuit containing the Hall generator (6).

4. A lock device according to claim 1 or claim 2 characterised in that a second compensation magnetic circuit comprises a further compensation flux conduction limb (9c) which is arranged symmetrically with respect to the Hall generator (6) and at a spacing and which is operative in the clock read-out position and which is magnetically coupled on the one hand to the key (1) and on the other hand to the magnetic return side of the magnetic circuit containing the Hall generator (6).

5. A lock device according to one of claims 1 to 4 characterised in that the magnitude of the leakage flux beteeen two successive flux conduction limbs (2) of the key (1) is fixed by mutual spacing thereof.

6. A lock device according to one of claims 1 to 4 characterised in that the magnitude of the leakage flux between two successive flux conduction limbs (2) of the key (1) is fixed by coupling flux conduction limbs (12a, 12b) of different geometrical shape, arranged between the flux conduction limbs (2) which are disposed in succession at the same mutual spacings.

7. A lock device according to claim 6 characterised in that the coupling flux conduction limbs (12a, 12b), in the region in which they come out of the key, have a portion of reduced constant width (b).

8. A lock device according to claim 7 characterised in that the clock flux conduction limbs (2) or coupling flux conduction limbs (12a, 12b) are set back by a portion or the whole of the structurally preset air gap ($d_{min}$) of the compensation circuit or the compensation circuits, relative to the surface of the key.

## Revendications

1. Dispositif de serrure comportant une clef (1) qui contient des données lisibles magnétiquement, se composant d'au moins un aimant permanent (10) et d'un générateur à effet Hall (6), dont l'induction magnétique varie en fonction de la position de la clef (1) qui comporte des zones d'informations codées en un code à deux valeurs au moins, lisibles magnétiquement et se suivant le long de son axe, ainsi que des plans de cadence, générateur qui produit une tension de signal dépendant de la valeur instantanée de l'induction, caractérisé en ce que la clef (1) contient, dans chaque plan de cadence à lire, une pièce conductrice de flux (2) qui produit, dans sa position en face du générateur à effet Hall (6), un maximum du flux traversant celui-ci, en ce que la grandeur du flux de dispersion entre deux pièces conductrices de flux (2) consécutives, dans leur position symétrique par rapport au générateur à effet Hall (6), indique la valeur de la zone d'information ($i_1$ à $i_6$), en ce

que le générateur à effet Hall (6) est monté dans un capteur (11) qui comporte au moins un autre circuit magnétique de compensation parallèle au circuit magnétique contenant le générateur à effet Hall (6), en ce que le retour de flux magnétique depuis le circuit magnétique contenant le générateur à effet Hall (6) et le circuit magnétique de compensation vers l'aimant permanent (10) passe par une résistance de retour magnétique prédéfinie $(R_R)$, et en ce que les résistances magnétiques du circuit magnétique contenant le générateur à effet Hall (6) et du circuit magnétique de compensation sont dimensionnées de telle manière qu'avec un entrefer entre la clef (1) et le capteur (11), il se produise une tension de compensation magnétique ayant une hauteur telle que le flux magnétique à travers le générateur à effet Hall (6) reste sensiblement constant.

2. Dispositif de serrure selon la revendication 1, caractérisé en ce que les résistances magnétiques du circuit magnétique de compensation ou des circuits magnétiques de compensation sont essentiellement constituées par au moins une barrette conductrice de flux de compensation (9a, 9b, 9c) et au moins un entrefer prédéfini par construction $(d_{min}; d_{1min})$, les surfaces de section magnétiquement actives de la barrette conductrice de flux de compensation déterminant, en coopération avec l'entrefer, la valeur de la résistance magnétique concernée.

3. Dispositif de serrure selon la revendication 1 ou 2, caractérisé en ce qu'un premier circuit magnétique de compensation est constitué par des barrettes conductrices de flux de compensation (9a, 9b) qui sont disposées symétriquement par rapport au générateur à effet Hall et à distance, et qui sont actives dans la position de lecture d'informations de la clef (1), barrettes qui sont couplées magnétiquement, d'une part, avec la clef (1) et, d'autre part, avec le côté de retour magnétique du circuit magnétique qui contient le générateur à effet Hall (6).

4. Dispositif de serrure selon la revendication 1 ou 2, caractérisé en ce qu'un second circuit magnétique de compensation est constitué par une autre barrette conductrice de flux de compensation (9c) qui est disposée symétriquement par rapport au générateur à effet Hall (6) et à distance, et qui est active dans la position de lecture de cadence, barrette qui est couplée magnétiquement, d'une part, avec la clef (1) et, d'autre part, avec le côté de retour magnétique du circuit magnétique qui contient le générateur à effet Hall (6).

5. Dispositif de serrure selon l'une quelconque des revendications 1 à 4, caractérisé en ce que la grandeur du flux de dispersion entre deux barrettes conductrices de flux (2) successives de la clef (1) est déterminée par la distance mutuelle de celles-ci.

6. Dispositif de serrure selon l'une quelconque des revendications 1 à 4, caractérisé en ce que la grandeur du flux de dispersion entre deux barrettes conductrices de flux (2) successives de la clef (1) est déterminée par des barrettes conductrices de flux de couplage (12a, 12b) de forme géométrique différente, disposées entre les barrettes conductrices de flux (2) qui se suivent à des distances mutuelles égales.

7. Dispositif de serrure selon la revendication 6, caractérisé en ce que les barrettes conductrices de flux de couplage (12a, 12b) comportent, dans la région où elles sortent de la clef, une partie de largeur réduite constante (b).

8. Dispositif de serrure selon la revendication 7, caractérisé en ce que les barrettes conductrices de flux de cadence (2) ou les barrettes conductrices de flux de couplage (12a, 12b) sont décalées en arrière, par rapport à la surface de la clef, dans une mesure partielle ou dans la mesure totale de l'entrefer prédéfini par construction $(d_{min})$ du circuit de compensation ou des circuits de compensation.

**0 151 625**

Fig.1

**Positive Aussteuerung**

Magn. Aussteuerg.-Fluß φ

Log 2
Log 1   } = Information
Log 0

Min. = Takt

Takt = Min.

Information = { Log 0 / Log 1 / Log 2 }

**Negative Aussteuerung**

Fig.2

**Positive Aussteuerung**

Magn. Aussteuerg.-Fluß φ

Max. = Takt

Log 0
Log 1   } = Information
Log 2

Information = { Log 2 / Log 1 / Log 0 }

Takt = Max.

**Negative Aussteuerung**

1

Fig. 3

Fig. 4

Fig. 5

Fig. 6a

6
11
7

$R_R$  9b  2  9a  $d_{min}$

N
S
10

Fig. 6b

$R_R$  $d_{max}$

N
S

Fig. 7

N

$V_k$  $R_{Hd}$  $R_{kd}$

$V$  $\phi_H = konst$  $\phi_k$

$V_{min}$  $R_H$  $R_K$

10  S

$R_R$  $\phi = \phi_H + \phi_k$  $V_{min}$

$d_{min} \,\hat{=}\, R_H, (R_{Hd} = 0); \; R_K, (R_{kd} = 0); \; V_{min}$

$d_{max} \,\hat{=}\, R_H + R_{Hdmax}; \; R_k + R_{kdmax}; \; V_{max}$

Fig. 8

$\phi_{kmax}$

magn. Wid. R

$\phi_{kmin}$

$R_k$

$R_k + R_{kdmax}$  $V_{kmax}$

$\phi_H = konst.$

$R_H$

$R_H + R_{Hdmax}$

0  magn. Spannung $V \rightarrow$  $V_{min}$  $V_{max}$

magn. Fluß $\phi$

5

0 151 625

Fig.9a

9b  7  8  9a

d_min   d_min

5  6  3  4

Fig.10

9b  7  8  9a

d_min   d_min

5  6  3  4

Fig.9b

8

Fig.9c

Ⅵ  Ⅳ  7  8  4

Ⅱ  Ⅱ

Ⅲ  Ⅲ

9b  Ⅵ  Ⅳ  9a

Fig.9e

8

9b

d_min

Fig.9d

8

7

6

3  4

Fig.11a

Ⅵ  Ⅵ  9c

9b  9a

Beweg-
Richtg.

7

Ⅶ  Ⅵ

Fig.11c

d_min

9b

8  6

Fig.11b

d1min

9c

7

6

7

Fig. 12

Fig. 13a

Fig. 13b

Fig. 13c